# FASCICULE DE BREVET EUROPEEN

(11) **EP 3 076 420 B1**
(45) Date de publication et mention de la délivrance du brevet: **04.10.2017**
(21) Numéro de dépôt: 15161972.3
(22) Date de dépôt: 31.03.2015
(51) Int. Cl.: H01H 31/00, H01H 33/666, H02B 13/035, H02B 13/075

(54) **MISE À LA TERRE RAPIDE À POUVOIR DE COUPURE POUR UN POSTE SOUS ENVELOPPE METALLIQUE**
SCHNELLERDUNGSVERFAHREN MIT STROMUNTERBRECHUNGSEIGENSCHAFT FÜR METALLGEKAPSELTE SCHALTANLAGE
QUICK EARTH CONNECTION WITH BREAKING CAPACITY FOR A STATION UNDER A METAL SHELL

(43) Date de publication de la demande: 05.10.2016
(73) Titulaire: General Electric Technology GmbH, 5400 Baden (CH)
(72) Inventeur: Biquez, François, 73100 Pugny-Chatenod (FR)
(74) Mandataire: Cleary, Fidelma

(56) Documents cités:
- EP-A1- 1 569 256
- EP-A1- 2 048 682
- GB-A- 2 027 999
- US-A1- 2005 211 675

## Description

### DOMAINE TECHNIQUE

La présente invention concerne la mise à la terre rapide d'une ligne haute tension pour l'extinction des arcs secondaires dans le cas d'un poste électrique sous enveloppe métallique de type GIS (d'après l'anglais Gas Insulated Substation) haute tension de 420kV à 1200 kV.

### ÉTAT DE LA TECHNIQUE ANTÉRIEURE

Pour les postes électriques sous enveloppes métalliques, on connait des solutions de coupure qui mettent en oeuvre des disjoncteurs isolés au gaz, typiquement du SF6, entre phase et terre. Ces dispositifs sont d'un encombrement très important.

Par ailleurs, pour des lignes aériennes très haute tension, l'extinction des arcs secondaires peut être réalisée en utilisant des dispositifs de mise à la terre à pouvoir de coupure, appelées HSES (d'après l'anglais High Speed Earthing Switch). En cas de défaut électrique entre une ligne et la terre, des disjoncteurs encadrant le défaut ouvrent le circuit électrique. Il se produit alors des arcs secondaires entre la ligne en défaut et la terre par induction des phases saines voisines. La fermeture des HSES encadrant le défaut permet d'éteindre les arcs secondaires. Les dispositifs de mise à la terre à pouvoir de coupure sont ensuite rouverts puis les disjoncteurs de ligne encadrant le défaut sont fermés de manière à rétablir au plus vite le courant dans la ligne qui était en défaut.

En outre, le document EP 1 580 783 décrit un dispositif de commande pour l'actionnement coordonné de deux appareils de commutation. L'un de ces appareils est une ampoule à vide et l'autre est un disjoncteur à gaz. Cependant, l'enseignement de ce document n'est pas adaptable à une mise à la terre rapide à pouvoir de coupure dans un poste électrique sous enveloppe métallique.

Le document EP 2 048 682 concerne un module réalisant des opérations de coupure et de mise à la terre dans le domaine de la distribution d'énergie électrique. Ce document ne permet pas d'optimiser le coût de la fonction de coupure, l'encombrement et l'énergie de manoeuvre d'un dispositif de mise à la terre rapide à pouvoir de coupure, pour un poste électrique sous enveloppe métallique.

### EXPOSÉ DE L'INVENTION

L'invention vise à résoudre les problèmes de la technique antérieure en fournissant un dispositif de mise à la terre rapide à pouvoir de coupure, pour un poste électrique sous enveloppe métallique, selon la revendication 1.

La présente invention combine la fonction de mise à la terre rapide déjà existante dans les postes GIS avec une fonction coupure réalisée par un interrupteur à vide moyenne tension. L'interrupteur à vide moyenne tension est très peu encombrant, ce qui permet de le disposer dans l'espace restreint existant entre les conducteurs sous tension et les enveloppes métalliques à la terre des postes GIS. En outre ce composant est peu onéreux.

Le circuit de mise à la terre rapide assure ainsi les fonctions de fermeture sur court-circuit et d'isolation diélectrique. L'interrupteur à vide en série avec le circuit de mise à la terre rapide assure la fonction de coupure du courant de l'arc secondaire, qui est typiquement de quelques kilo ampères.

On optimise ainsi le coût de la fonction de coupure, l'encombrement et l'énergie de manoeuvre, car l'interrupteur à vide moyenne tension ne nécessite que peu d'énergie pour couper le courant de l'arc secondaire.

La fermeture sous courant de défaut est réalisée par les organes de mise à la terre rapide. Les contacts de l'interrupteur à vide sont donc préservés de tout soudage possible à la fermeture en cas de rebond. L'arc apparaissant à la fermeture se produit entre les contacts du circuit de mise à la terre rapide car à l'instant d'apparition de cet arc, l'interrupteur à vide est déjà fermé.

La tenue diélectrique est assurée par les organes de mise à la terre rapide et non par l'interrupteur à vide qui a toujours potentiellement des risques d'amorçage lorsque le circuit électrique est ouvert. L'interrupteur à vide offre un pouvoir de coupure à faible énergie, à faible course et dans un faible encombrement.

L'invention concerne aussi un poste électrique équipé d'un dispositif de mise à la terre rapide à pouvoir de coupure tel que précédemment présenté.

L'invention concerne encore un procédé de fermeture d'un dispositif de mise à la terre rapide à pouvoir de coupure, dans un poste électrique sousenveloppe métallique, le dispositif comportant un circuit de mise à la terre rapide d'un conducteur du poste électrique, un interrupteur à vide relié en série entre le circuit de mise à la terre rapide et la terre, et un organe de manoeuvre adapté pour actionner le circuit de mise à la terre rapide et l'interrupteur à vide, caractérisé en ce qu'il comporte, à partir d'un état d'ouverture du circuit de mise à la terre rapide et de l'interrupteur à vide, les étapes de :
- fermeture de l'interrupteur à vide, puis
- fermeture du circuit de mise à la terre rapide.

L'invention concerne encore un procédé d'ouverture d'un dispositif de mise à la terre rapide à pouvoir de coupure, dans un poste électrique sous enveloppe métallique, le dispositif comportant un circuit de mise à la terre rapide d'un conducteur du poste électrique, un interrupteur à vide relié en série entre le circuit de mise à la terre rapide et la terre, et un organe de manoeuvre adapté pour actionner le circuit de mise à la terre rapide et l'interrupteur à vide, caractérisé en ce qu'il comporte, à partir d'un état de fermeture du circuit de mise à la terre rapide et de l'interrupteur à vide, les étapes de :
- ouverture du circuit de mise à la terre rapide puis
- ouverture de l'interrupteur à vide.

Le poste électrique équipé d'un dispositif de mise à la terre rapide à pouvoir de coupure et les procédés de fermeture et d'ouverture présentent des avantages analogues à ceux précédemment présentés.

### BRÈVE DESCRIPTION DES DESSINS

D'autres caractéristiques et avantages apparaîtront à la lecture de la description suivante de deux modes de réalisation préférés donnés à titre d'exemple non limitatif, décrit en référence aux figures dans lesquelles :
La figure 1 représente un dispositif de mise à la terre rapide à pouvoir de coupure dans un poste électrique sous enveloppe métallique, selon un mode de réalisation de l'invention.
La figure 2 représente un autre mode de réalisation du dispositif de mise à la terre rapide à pouvoir de coupure selon l'invention.
La figure 3 représente un cycle de fermeture du dispositif de mise à la terre rapide à pouvoir de coupure de la figure 1.
La figure 4 représente un cycle d'ouverture du dispositif de mise à la terre rapide à pouvoir de coupure de la figure 1.
La figure 5 représente un procédé de fermeture d'un dispositif de mise à la terre rapide à pouvoir de coupure, selon un mode de réalisation de l'invention.
La figure 6 représente un procédé d'ouverture d'un dispositif de mise à la terre rapide à pouvoir de coupure, selon un mode de réalisation de l'invention.

### EXPOSÉ DÉTAILLÉ DE MODES DE RÉALISATION PARTICULIERS

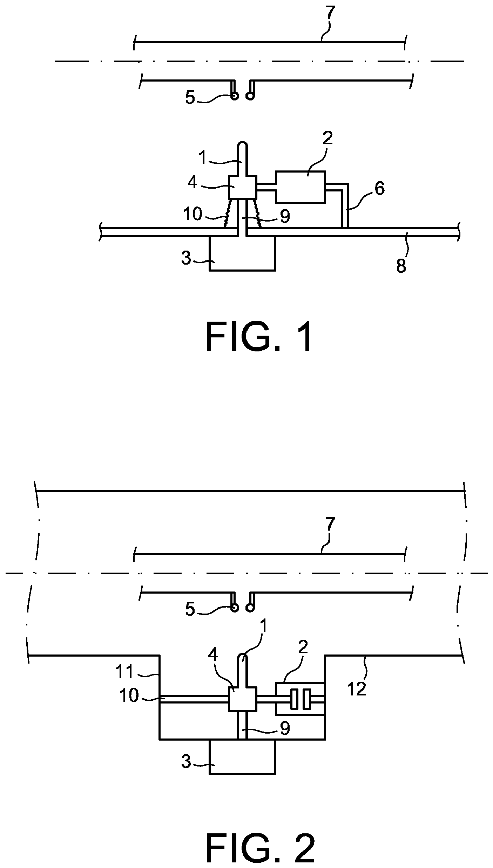

Selon un mode de réalisation préféré représenté à la **figure 1****,** un dispositif de mise à la terre rapide à pouvoir de coupure équipe un poste électrique sous enveloppe métallique.

Seuls les éléments utiles à la compréhension de l'invention sont décrits dans la suite.

Le dispositif de mise à la terre rapide à pouvoir de coupure comporte tout d'abord un circuit de mise à la terre rapide.

Le circuit de mise à la terre rapide comporte un élément mobile en translation 1, entre une position de fermeture électrique et une position d'ouverture électrique qui seront décrites dans la suite.

Le circuit de mise à la terre rapide comporte un élément fixe 5 relié à un conducteur 7 du poste électrique sous enveloppe métallique. L'élément fixe 5 est en vis-à-vis de l'élément mobile 1 de sorte que ces deux éléments sont en contact en position de fermeture électrique. L'élément mobile est par exemple une prise mâle et l'élément fixe une prise femelle, ces deux prises étant dimensionnées pour assurer un contact électrique lorsqu'elles sont assemblées.

Le dispositif de mise à la terre rapide à pouvoir de coupure selon l'invention comporte un interrupteur à vide 2 moyenne tension. L'interrupteur à vide 2 comporte essentiellement une ampoule à vide dans laquelle des contacts électriques peuvent être ouverts ou fermés, selon une faible course. L'interrupteur à vide 2 présente un pouvoir de coupure à faible énergie, et est d'un faible encombrement.

L'interrupteur à vide 2 est relié électriquement d'une part au circuit de mise à la terre rapide, plus particulièrement à l'élément mobile 1, et d'autre part à l'enveloppe métallique 8 du poste électrique par une connexion électrique 6. L'enveloppe métallique 8 est reliée à la terre et renferme un gaz isolant, typiquement de l'hexafluorure de soufre (SF6). L'interrupteur à vide est donc relié en série entre le circuit de mise à la terre rapide et la terre.

Un organe de manoeuvre 3 est disposé à l'extérieur de l'enveloppe métallique 8. L'organe de manoeuvre 3 commande à la fois le circuit de mise à la terre rapide et l'interrupteur à vide 2. Pour cela, l'organe de manoeuvre 3 est mécaniquement relié à une bielle isolante 9 qui elle-même est reliée à un boîtier de transmission de mouvement 4. Un support isolant 10 est disposé entre le boîtier de transmission de mouvement 4 et l'enveloppe métallique 8.

Le boîtier de transmission de mouvement 4 transmet un mouvement à la fois à l'élément mobile 1 et à l'interrupteur à vide 2, en réponse à une action de l'organe de manoeuvre 3.

Le boîtier de transmission de mouvement 4 est par exemple du type décrit dans le document EP 1 580 783. Bien entendu, d'autres modes de réalisation pour transmettre un mouvement à l'élément mobile 1 et à l'interrupteur à vide 2 sont possibles.

Le fonctionnement du dispositif de mise à la terre rapide à pouvoir de coupure selon l'invention est décrit dans la suite.

La **figure 2** représente le dispositif de mise à la terre rapide à pouvoir de coupure selon un autre mode de réalisation de l'invention. Les mêmes références numériques ont été utilisées pour désigner des éléments similaires. La figure 2 illustre plus particulièrement l'implantation du dispositif selon l'invention dans l'enveloppe métallique.

Ainsi, le poste électrique comporte une enveloppe métallique qui a la forme générale d'un cylindre 12. Le conducteur électrique 7 est disposé dans l'axe de ce cylindre.

Le cylindre 12 comporte un logement 11 en saillie vers l'extérieur du cylindre 12. Le dispositif de mise à la terre rapide à pouvoir de coupure selon l'invention est disposé dans le logement 11, à l'exception de l'organe de manoeuvre 3 qui se trouve sur une paroi extérieure de ce logement 11.

Le logement 11 est formé sensiblement en vis-à-vis des contacts fixes 5.

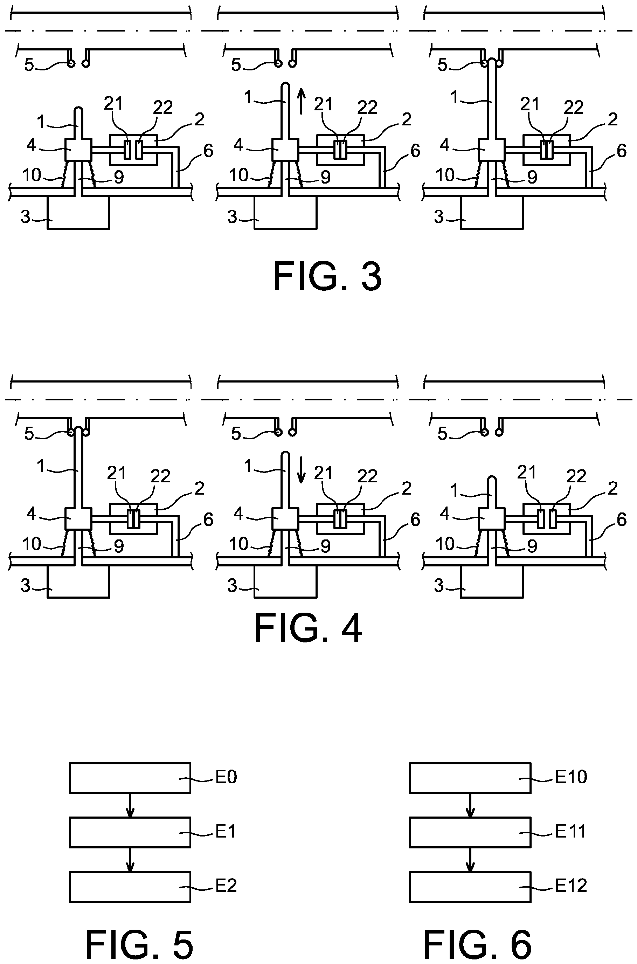

La **figure 3** représente un cycle de fermeture du dispositif de mise à la terre rapide à pouvoir de coupure de la figure 1.

En partant de la gauche de la figure 3, dans une étape initiale, le dispositif de mise à la terre rapide à pouvoir de coupure est ouvert. L'élément mobile 1 et l'élément fixe 5 ne sont pas en contact électrique. L'interrupteur à vide 2 est ouvert électriquement. L'interrupteur à vide 2 comporte deux contacts électriques 21 et 22 qui sont séparés.

On suppose que la fermeture du dispositif de mise à la terre rapide à pouvoir de coupure est commandée. Comme illustré au centre de la figure 3, dans une étape intermédiaire, l'organe de manoeuvre 3 impose alors la fermeture de l'interrupteur à vide 2, par la mise en contact de ses deux contacts 21 et 22.

L'interrupteur à vide 2 étant fermé, l'organe de manoeuvre 3 impose la fermeture du circuit de mise à la terre rapide. Ainsi, l'élément mobile 1 de mise à la terre est en cours de mouvement pour se rapprocher de l'élément fixe 5.

La partie droite de la figure 3 illustre une étape finale de fermeture du dispositif de mise à la terre rapide à pouvoir de coupure. L'interrupteur à vide 2 est toujours fermé. L'élément mobile 1 de mise à la terre est maintenant en contact de l'élément fixe 5. Le circuit de mise à la terre rapide est fermé.

Ainsi, la fermeture sous courant de défaut est réalisée par les contacts 1 et 5 de mise à la terre rapide. Les contacts 21 et 22 de l'interrupteur à vide 2 sont donc préservés de tout soudage possible à la fermeture en cas de rebond. Si un arc apparaît à la fermeture, il se produit entre les contacts 1 et 5 du circuit de mise à la terre rapide car à l'instant d'apparition de cet arc, l'interrupteur à vide est déjà fermé.

La **figure 4** représente un cycle d'ouverture du dispositif de mise à la terre rapide à pouvoir de coupure de la figure 1.

En partant de la gauche de la figure 4, dans une étape initiale, le dispositif de mise à la terre rapide à pouvoir de coupure est fermé. L'élément mobile 1 et l'élément fixe 5 sont en contact électrique. L'interrupteur à vide 2 est fermé électriquement. Les deux contacts électriques 21 et 22 de l'interrupteur à vide 2 sont en contact.

On suppose que l'ouverture du dispositif de mise à la terre rapide à pouvoir de coupure est commandée. Comme illustré au centre de la figure 4, dans une étape intermédiaire, l'organe de manoeuvre 3 impose alors l'ouverture du circuit de mise à la terre rapide. L'élément mobile 1 de mise à la terre est en cours de mouvement pour se séparer et s'éloigner de l'élément fixe 5.

L'interrupteur à vide 2 est toujours fermé.

La partie droite de la figure 4 illustre une étape finale d'ouverture du dispositif de mise à la terre rapide à pouvoir de coupure. Lorsque les éléments 1 et 5 de mise à la terre rapide sont suffisamment éloignés l'un de l'autre pour tenir la tension, l'organe de manoeuvre 3 impose l'ouverture de l'interrupteur à vide 2. En cas de courant de défaut à couper, un arc s'établit entre les contacts 21 et 22 de l'interrupteur à vide 2 et cet interrupteur coupe ce courant lors de son passage par zéro.

La tenue diélectrique est assurée par les organes 1 et 5 de mise à la terre rapide et non par l'interrupteur à vide qui a toujours potentiellement des risques d'amorçage lorsque le circuit électrique est ouvert. L'interrupteur à vide offre un pouvoir de coupure à faible énergie, à faible course et dans un faible encombrement.

La **figure 5** illustre un mode de réalisation de procédé de fermeture d'un dispositif de mise à la terre rapide à pouvoir de coupure, sous la forme d'un organigramme comportant des étapes E0 à E2.

Dans une étape initiale E0, le dispositif de mise à la terre rapide à pouvoir de coupure est ouvert. L'élément mobile 1 et l'élément fixe 5 ne sont pas en contact électrique. L'interrupteur à vide 2 est ouvert électriquement. Les deux contacts électriques 21 et 22 de l'interrupteur à vide 2 sont séparés.

A une étape suivante E1, la fermeture du dispositif de mise à la terre rapide à pouvoir de coupure est commandée. L'organe de manoeuvre 3 impose alors la fermeture de l'interrupteur à vide 2, par la mise en contact de ses deux contacts 21 et 22.

L'interrupteur à vide 2 étant fermé, l'organe de manoeuvre 3 impose la fermeture du circuit de mise à la terre rapide. Ainsi, l'élément mobile 1 de mise à la terre se rapproche de l'élément fixe 5.

En pratique, il est possible que le mouvement de fermeture du circuit de mise à la terre rapide commence avant la fermeture de l'interrupteur à vide 2, à condition que la distance d'isolement entre les contacts 1 et 5 demeure suffisamment grande pour empêcher la formation d'un arc électrique, tant que l'interrupteur à vide n'est pas fermé.

A une étape suivante E2, qui est une étape finale de fermeture du dispositif de mise à la terre rapide à pouvoir de coupure, l'interrupteur à vide 2 est toujours fermé. L'élément mobile 1 de mise à la terre est maintenant en contact de l'élément fixe 5. Le circuit de mise à la terre rapide est fermé.

La **figure 6** illustre un mode de réalisation de procédé d'ouverture d'un dispositif de mise à la terre rapide à pouvoir de coupure, sous la forme d'un organigramme comportant des étapes E10 à E12.

Dans une étape initiale E10, correspondant à l'étape finale de fermeture E2 précédemment décrite, le dispositif de mise à la terre rapide à pouvoir de coupure est fermé. L'élément mobile 1 et l'élément fixe 5 sont en contact électrique. L'interrupteur à vide 2 est fermé électriquement. Les deux contacts électriques 21 et 22 de l'interrupteur à vide 2 sont en contact.

A une étape suivante E11, l'ouverture du dispositif de mise à la terre rapide à pouvoir de coupure est commandée. L'organe de manoeuvre 3 impose alors l'ouverture du circuit de mise à la terre rapide. L'élément mobile 1 de mise à la terre se sépare et s'éloigne de l'élément fixe 5.

L'interrupteur à vide 2 demeure fermé à l'étape E11.

A une étape suivante E12, qui est une étape finale d'ouverture du dispositif de mise à la terre rapide à pouvoir de coupure, lorsque les éléments 1 et 5 de mise à la terre rapide sont suffisamment éloignés l'un de l'autre pour tenir la tension, l'organe de manoeuvre 3 impose l'ouverture de l'interrupteur à vide 2.

## Revendications

1. Dispositif de mise à la terre rapide à pouvoir de coupure, pour un poste électrique sous enveloppe métallique (8), le dispositif comportant:
- un circuit (1, 5) de mise à la terre rapide d'un conducteur (7) du poste électrique,
- un interrupteur à vide (2) relié en série entre le circuit de mise à la terre rapide et la terre, et
- un organe de manoeuvre (3) adapté pour actionner le circuit de mise à la terre rapide et l'interrupteur à vide,
**caractérisé en ce que** l'organe de manoeuvre (3) est adapté pour relier électriquement le conducteur (7) du poste électrique à la terre, à partir d'un état d'ouverture du circuit (1, 5) de mise à la terre rapide et de l'interrupteur à vide (2), en fermant l'interrupteur à vide (2) puis en fermant le circuit (1, 5) de mise à la terre rapide, et
**en ce que** l'organe de manoeuvre (3) est adapté pour séparer électriquement le conducteur (7) du poste électrique de la terre, à partir d'un état de fermeture du circuit (1, 5) de mise à la terre rapide et de l'interrupteur à vide (2), en ouvrant le circuit (1, 5) de mise à la terre rapide puis en ouvrant l'interrupteur à vide (2).

2. Poste électrique équipé d'un dispositif de mise à la terre rapide à pouvoir de coupure selon la revendication 1.

3. Procédé de fermeture d'un dispositif de mise à la terre rapide à pouvoir de coupure, dans un poste électrique sous enveloppe métallique, le dispositif comportant un circuit de mise à la terre rapide d'un conducteur du poste électrique, un interrupteur à vide relié en série entre le circuit de mise à la terre rapide et la terre, et un organe de manoeuvre adapté pour actionner le circuit de mise à la terre rapide et l'interrupteur à vide, **caractérisé en ce qu'**il comporte, à partir d'un état (E0) d'ouverture du circuit de mise à la terre rapide et de l'interrupteur à vide, les étapes de :
- fermeture (E1) de l'interrupteur à vide, puis
- fermeture (E2) du circuit de mise à la terre rapide.

4. Procédé d'ouverture d'un dispositif de mise à la terre rapide à pouvoir de coupure, dans un poste électrique sous enveloppe métallique, le dispositif comportant un circuit de mise à la terre rapide d'un conducteur du poste électrique, un interrupteur à vide relié en série entre le circuit de mise à la terre rapide et la terre, et un organe de manoeuvre adapté pour actionner le circuit de mise à la terre rapide et l'interrupteur à vide, **caractérisé en ce qu'**il comporte, à partir d'un état (E10) de fermeture du circuit de mise à la terre rapide et de l'interrupteur à vide, les étapes de :
- ouverture (E11) du circuit de mise à la terre rapide puis
- ouverture (E12) de l'interrupteur à vide.

## Patentansprüche

1. Vorrichtung zur raschen Erdung mit Trennvermögen für eine elektrische Station in einer Metallhülle (8), wobei die Vorrichtung umfasst:
- eine Schaltung (1, 5) zur raschen Erdung eines Leiters (7) der elektrischen Station,
- einen Vakuumunterbrecher (2), der in Serie zwischen der Schaltung zur raschen Erdung und Erde angeschlossen ist,
- ein Manövrierelement (3), das geeignet ist, die Schaltung zur raschen Erdung und den Vakuumunterbrecher zu betätigen,
**dadurch gekennzeichnet, dass** das Manövrierelement (3) geeignet ist, den Leiter (7) der elektrischen Station mit Erde elektrisch zu verbinden, ausgehend von einem Zustand der Öffnung der Schaltung (1, 5) zur raschen Erdung und des Vakuumunterbrechers (2), indem der Vakuumunterbrecher (2) geschlossen wird, und indem dann die Schaltung (1, 5) zur raschen Erdung geschlossen wird, und dadurch, dass das Manövrierelement (3) geeignet ist, den Leiter (7) der elektrischen Station von Erde zu trennen, ausgehend von einem Zustand des Schließens der Schaltung (1, 5) zur raschen Erdung und des Vakuumunterbrechers (2), indem die Schaltung (1, 5) zur raschen Erdung geöffnet wird, und indem dann der Vakuumunterbrecher (2) geöffnet wird.

2. Elektrische Station, welche mit einer Vorrichtung zur raschen Erdung mit Trennvermögen nach Anspruch 1 ausgestattet ist.

3. Verfahren zum Schließen einer Vorrichtung zur raschen Erdung mit Trennvermögen in einer elektrischen Station in einer Metallhülle, wobei die Vorrichtung eine Schaltung zur raschen Erdung eines Leiters der elektrischen Station, einen Vakuumunterbrecher, der in Serie zwischen der Schaltung zur raschen Erdung und Erde angeschlossen ist, und ein Manövrierelement, das geeignet ist, die Schaltung zur raschen Erdung und den Vakuumunterbrecher zu betätigen, umfasst, **dadurch gekennzeichnet, dass** dieses, ausgehend von einem Zustand (E0) der Öffnung der Schaltung zur raschen Erdung und des Vakuumunterbrechers, die Schritte umfasst:
- Schließen (E1) des Vakuumunterbrechers, dann
- Schließen (E2) der Schaltung zur raschen Erdung.

4. Verfahren zum Öffnen einer Vorrichtung zur raschen Erdung mit Trennvermögen in einer elektrischen Station in einer Metallhülle, wobei die Vorrichtung eine Schaltung zur raschen Erdung eines Leiters der elektrischen Station, einen Vakuumunterbrecher, der in Serie zwischen der Schaltung zur raschen Erdung und Erde angeschlossen ist, und ein Manövrierelement, das geeignet ist, die Schaltung zur raschen Erdung und den Vakuumunterbrecher zu betätigen, umfasst, **dadurch gekennzeichnet, dass** dieses, ausgehend von einem Zustand (E10) des Schließens der Schaltung zur raschen Erdung und des Vakuumunterbrechers, die Schritte umfasst:
- Öffnen (E11) der Schaltung zur raschen Erdung, dann
- Öffnen (E12) des Vakuumunterbrechers.

## Claims

1. High speed earthing switch for a gas insulated substation in metal protection (8), the switch comprising:
- a circuit (1, 5) for high speed earthing of a conductor (7) of the substation,
- a vacuum switch (2) connected in series between the high speed earthing circuit and earth and
- an actuating device (3) adapted for operating the high speed earthing circuit and the vacuum switch,
**characterised in that** the actuating device (3) is adapted for electrically connecting the substation conductor (7) to earth, from an open state of the high speed earthing circuit (1, 5) and of the vacuum switch (2), by closing the vacuum switch (2) and then by closing the high speed earthing circuit (1, 5) and
**in that** the actuating device (3) is adapted for electrically separating the substation conductor (7) from earth, from a closed state of the high speed earthing circuit (1, 5) and of the vacuum switch (2), by opening the high speed earthing circuit (1, 5) and then by opening the vacuum switch (2).

2. Substation equipped with a high speed earthing switch according to claim 1.

3. Method of closing a high speed earthing switch, in a gas insulated substation, the switch comprising a circuit for high speed earthing of a conductor of the substation, a vacuum switch connected in series between the high speed earthing circuit and earth and an actuating device adapted for operating the high speed earthing circuit and the vacuum switch, **characterised in that** it comprises, from an open state (E0) of the high speed earthing circuit and of the vacuum switch, the stages of:
- closing (E1) the vacuum switch and then
- closing (E2) the high speed earthing circuit.

4. Method of opening a high speed earthing switch, in a gas insulated substation, the switch comprising a circuit for high speed earthing of a conductor of the substation, a vacuum switch connected in series between the high speed earthing circuit and earth and an actuating device adapted for operating the high speed earthing circuit and the vacuum switch, **characterised in that** it comprises, from a closed state (E10) of the high speed earthing circuit and of the vacuum switch, the stages of:
- opening (E11) the high speed earthing circuit and then
- opening (E12) the vacuum switch.
